# EUROPÄISCHE PATENTSCHRIFT

(11) **EP 2 508 839 B1**
(45) Veröffentlichungstag und Bekanntmachung des Hinweises auf die Patenterteilung: **09.07.2014**
(21) Anmeldenummer: 11161535.7
(22) Anmeldetag: 07.04.2011
(51) Int. Cl.: G01B 3/22, G08C 17/02, G01B 7/00, H04Q 9/00

(54) **Messeinrichtung mit Sendeschaltung zur drahtlosen Übertragung eines Messwertsendesignals**
Measuring device with transmission circuit for wireless transmission of a measurement value transmission signal
Dispositif de mesure doté d'une commutation d'émission pour la transmission sans fil d'un signal de mesure

(43) Veröffentlichungstag der Anmeldung: 10.10.2012
(73) Patentinhaber: Carl Mahr Holding GmbH, 37073 Göttingen (DE)
(72) Erfinder: Seibold, Wolfgang, 72074 Tübingen (DE); Engler, Thomas, 73773 Aichwald (DE); Hund, Eugen, 73061 Ebersbach (DE)
(74) Vertreter: Rüger, Barthelt & Abel

(56) Entgegenhaltungen:
- EP-A2- 1 630 762
- CN-Y- 201 364 131
- DE-A1-102006 017 243
- DE-U1-202006 017 829
- GB-A- 2 406 647
- JP-A- 7 027 501
- JP-A- 2010 231 566
- US-A- 4 973 957
- US-B1- 6 526 670

## Beschreibung

Die Erfindung betrifft eine Messeinrichtung, die als Messschieber, als Messuhr oder als Messschraube ausgeführt sein kann. Die Messeinrichtung dient beispielweise zur Längenmessung. Sie weist ein Gehäuse auf, an dem ein Messwertaufnehmer angeordnet ist. Durch Veränderung der Stellung des Messwertaufnehmers wird in der Messeinrichtung über eine Messschaltung ein elektrisches Messsignal erzeugt. Die Stellung des Messwertaufnehmers kann durch eine Bewegung oder Verformung, beispielweise eine lineare Verschiebung oder Schwenkbewegung verändert werden. Die Messeinrichtung kann eine Display oder eine andere Anzeigeeinrichtung aufweisen, auf der der dem Messsignal entsprechende Messwert für den Bediener ausgegeben werden kann. Derartige Messeinrichtungen sind seit längerem bekannt.

DE 10 2006 017 243 A1 beschreibt ein Sende-Empfangsgerät zur Übertragung von Feldgerätesignalen. Auf diese Weise werden drahtlos Prozessgrößen mit Hilfe einer Funkschnittstelle übermittelt. Um die Verdrahtung über ein Feldbussystem im Bereich von Mess- und Regeleinrichtungen zu vermeiden, kann das Sende-Empfangsgerät an die Feldgeräteschnittstelle eines Feldgeräts angeschlossen werden und eine drahtlose Übertragung durchführen. Das Sende-Empfangsgerät kann in einem ersten Betriebszustand ein Feldgerätesignal an einer Feldgeräteschnittstelle aufnehmen und über eine Funkschnittstelle versenden. Als Feldgerätesignal dienen beispielsweise Messwerte.

Zum Anschluss eines separaten Sende-Empfangsgeräts wie in der DE 10 2006 017 243 A1 vorgeschlagen, ist am Feldgerät, also beispielsweise an einer Messeinrichtung, eine Schnittstelle notwendig. Es hat sich gezeigt, dass diese Vorgehensweise bei stationär angeordneten Messeinrichtungen gut funktioniert. Allerdings ist durch das Verbinden des Sende- und Empfangsgeräts mit der Messeinrichtung bei Handmessgeräten, die von einem Bediener mitgeführt und bei Bedarf verwendet werden, die Handhabbarkeit durch das Sende-Empfangsgerät beeinträchtigt.

In GB 24 06 647 A wird ein Reifenprüfgerät beschrieben, das zur Messung des Luftdrucks sowie der Profiltiefe vorgesehen ist. Das Reifenprüfgerät kann die gemessene Profiltiefe drahtlos an einen Empfänger übertragen. Hierfür ist im Gehäuse des Prüfgeräts eine Sendeeinrichtung vorgesehen.

In JP 7-27501 ist ein digitaler Messschieber mit einer Sendeschaltung beschrieben. Im Gehäuse des Messschiebers sind Batterien, eine Messschaltung sowie eine Sendeschaltung angeordnet. Die Antenne der Sendeschaltung ist als Leiterplattenantenne ausgeführt und in das Gehäuse integriert.

Ein Verschleißmessgerät für Radbremsscheiben ist in DE 20 2006 017 829 U1 beschrieben. Am Gehäuse des Verschleißmessgerätes ist eine von einer Abdeckung abgedeckt Schnittstelle vorhanden, die auch als drahtlose Schnittstelle ausgeführt sein kann.

Eine US-Einrichtung, die zur drahtlosen Übertragung von Messdaten eingerichtet ist, beschreibt auch CN 201 36 41 31.

In US 4 973 957 ist ein System beschrieben, bei der mehrere Messschieber über am Messschieber vorhandene Schalter adressiert werden können. Über eine Sendeeinrichtung kann ein Messwert drahtlos an eine Zentraleinheit übertragen werden.

Außerdem beschreibt US 6 526 670 B1 ein System einer Messmaschine mit einem Messkopf, der eine messkopfseitige Sende- und Empfangsschaltung aufweist. Davon entfernt ist am Maschinengestell eine maschinenseitige Sende- und Empfangsschaltung angeordnet. Zwischen den beiden Schaltungen können beispielsweise optische Signale übertragen werden. Auf diese Weise ist es möglich, von der maschinenseitigen Sende- und Empfangsschaltung Ein- bzw. Ausschaltsignale an den Messkopf zu übertragen, beispielsweise um diesen in einen Ruhezustand zu versetzen oder ein- oder auszuschalten. Abhängig vom gesendeten Signal wird daher ereignisgesteuert der Messkopf aktiviert oder deaktiviert. Um das versehentliche Einschalten aufgrund von Störsignalen, beispielsweise durch Leuchtstofflampen, zu vermeiden, weißt der Messkopf eine Auswerteschaltung auf. Die empfangenen Signale werden ausgewärtet, wobei Störsignale erkannt und nicht zum Ein- bzw. Ausschalten der Energieversorgung des Messkopfes führen.

JP 2010231566 beschreibt ein sogenanntes "Multi-Hop-Netzwerk" aus vielen Sensoreinheiten, die als Relaisstation dienen, um Signale anderer Sensoreinheiten weiterleiten zu können. Hierfür geht jede Sensoreinheit regelmäßig in einen empfangsbereiten Zustand. Die Zeitdauer zwischen zwei aufeinanderfolgenden empfangsbereiten Zuständen ist kürzer, als die Sendedauer beim Senden eines Signals, so dass sichergestellt ist, dass während des Sendens dieses Signals durch eine sendende Sensoreinheit, eine andere Sensoreinheit als Empfänger arbeitet. Auf diese Weise sollen Nachrichten über mehrere Stationen über weite Strecken übertragen werden.

EP 1 630 762 A2 beschreibt an eine Zentraleinheit angeschlossene drahtlose Messeinrichtungen. Die Messeinrichtungen gehen zyklisch für kurze Zeit aus einem Ruhezustand in einen empfangsbereisten Zustand. Ein von der Zentraleinheit empfangenes Messinstruktionssignal enthält Daten, die den Sendezeitpunkt für die Messeinrichtung angeben. Anschließend sendet die Zentraleinheit ein Synchronisationssignal, als Bezugszeitpunkt für den späteren Sendezeitpunkt. Nach Erreichen des Sendezeitpunktes sendet die Messeinrichtung Daten an die Zentraleinheit.

Es kann daher als Aufgabe der vorliegenden Erfindung angesehen werden, eine Messeinrichtung zu schaffen, die sich insbesondere für von einer Bedienperson mitgeführte Messgeräte wie Messschieber, Messuhren oder Messschrauben eignet und deren Handhabung nicht beeinträchtigt und einen geringen Energiebedarf aufweist.

Diese Aufgabe wird durch eine Messeinrichtung mit den Merkmalen des Patentanspruches 1 gelöst.

Erfindungsgemäß weist die Messeinrichtung eine elektrische und/oder elektronische Messschaltung auf, die dazu eingerichtet ist, aus der Stellung des Messwertaufnehmers ein elektrisches Messsignal zu bilden. Vorzugsweise verfügt die Messeinrichtung über eine akustische und/oder optische Ausgabeeinheit, z.B. ein Display, über das der dem Messsignal entsprechende Messwert der Bedienerperson angezeigt werden kann. Zur Speicherung und Verarbeitung des Messsignals dann dieses außerdem drahtlos und vorzugsweise per Funk an eine Zentraleinheit übermittelt werden. Hierfür ist eine Sendeschaltung vorgesehen, die dazu eingerichtet ist, das Messsignal von der Messschaltung zu empfangen und daraus ein den aktuell anliegenden Messwert aufweisendes Übertragungssignal zu erzeugen, das von der Messeinrichtung drahtlos an die Zentraleinheit übermittelt werden kann. Sowohl die Sendschaltung, als auch die Messschaltung sind im gemeinsamen Gehäuse der Messeinrichtung angeordnet, vorzugsweise auf einer gemeinsamen Leiterplatte. Bei einer bevorzugten Ausführungsform ist die Antenne der Sendeschaltung ebenfalls innerhalb des Gehäuses angeordnet und vorzugsweise als Leiterplattenantenne oder als SMD-Antenne ausgeführt. Dadurch wird ein kompakter Aufbau mit geringem Bauraum der Messeinrichtung erreicht, wodurch die Handhabung und Bedienerführung durch die Bedienperson verbessert ist. Die Messeinrichtung kann Messwerte kabellos übermitteln. Eine externe Sendeeinrichtung bzw. eine externe Antenne entfallen und stören die Handhabung der Messeinrichtung nicht. Außerdem ist eine von außen zugängliche Schnittstelle zwischen der Messschaltung und der Sendeschaltung vermieden. Dies hat den Vorteil, dass das Gehäuse besser in der entsprechenden Gehäuseschutzbauart als staubgeschütztes oder staubdichtes und/oder wassergeschütztes Gehäuse realisiert werden kann. Es ist dabei erforderlichenfalls auch möglich, auf drahtgebundene Schnittstellen vollständig zu verzichten und lediglich die innerhalb des Gehäuses vorhandene drahtlose Sendeschnittstelle durch die Sendeschaltung vorzusehen.

Eine Empfangsschaltung ist vorhanden, die integriert mit der Sendeschaltung als Sende- und Empfangsschaltung ausgeführt ist. Die Sende- und Empfangsschaltung synchronisiert sich in einem vorgegebenen Zeitintervall mit der Zentraleinheit. Liegt eine Sendeanforderung vor, so erfolgt unmittelbar im Anschluss an den Empfang des Zeitsynchronisationssignals das Senden des Übertragungssignals mit dem aktuell anliegenden Messwert an die Zentraleinheit, während außerhalb dieses fest vorgegebenen Zeittakts mit den Zeitintervallen keine Sendeübertragung durch die Messeinrichtung erfolgt. Die Sende- und Empfangsschaltung befindet sich zwischen den Synchronisations- und Sendezeitfenstern in einem Ruhezustand, sofern dieser Ruhezustand nicht durch eine Sendeanforderung aufgehoben wird.

Bei einer bevorzugten Ausführungsform ist der Sendeschaltung und der Messschaltung eine gemeinsame Spannungsversorgungsschaltung im Gehäuse zugeordnet. Die Spannungsversorgungsschaltung weist einen Energiespeicher auf, beispielsweise eine Batterie oder einen wiederaufladbaren Akkumulator. Dieser Energiespeicher dient sowohl zur Bereitstellung einer Versorgungsspannung für die Sendeschaltung, als auch einer Versorgungsspannung für die Messschaltung. Die Spannungsversorgungsschaltung kann insbesondere auf einer gemeinsamen Leiterplatte mit der Sendeschaltung und/oder der Messschaltung angeordnet sein. Eine doppelte Spannungsversorgung für die Messschaltung und die Sendeschaltung entfällt, wodurch Bauraum gespart und alle Bauelemente platzsparend in einem gemeinsamen Gehäuse angeordnet werden können. Da lediglich ein einziger Energiespeicher zur Spannungsversorgung vorhanden ist, genügt auch eine einzige verschließbare Öffnung am Gehäuse zum Auswechseln des Energiespeichers, wodurch dieses sehr leicht in der entsprechenden Gehäuseschutzbauart ausgeführt werden kann.

Bei einer vorteilhaften Ausführung ist eine mit der Sendeschaltung verbundene erste Versorgungsleitung der Spannungsversorgungsschaltung unmittelbar an die Versorgungsspannung angelegt. Dabei kann eine mit der Messschaltung verbundene zweite Versorgungsleitung über einen ohmschen Widerstand an der Versorgungsspannung anliegen. Es ist dabei vorteilhaft, wenn die zweite Versorgungsleitung über einen Kondensator mit Masse verbunden ist. Der Kondensator dient zur Pufferung der an der zweiten Versorgungsleitung anliegenden Versorgungsspannung für die Messschaltung. Bei dieser Anordnung ist sichergestellt, dass Spannungsschwankungen, die während des Sendens durch die Sendeschaltung verursacht werden können, keine wesentliche Beeinflussung der Versorgungsspannung an der zweiten Versorgungsleitung bewirken, die das Messsignal beeinträchtigen oder verfälschen könnte. Auf diese Weise wird gewährleistet, dass der korrekte Messwert durch das Messsignal erfasst und an die Sendschaltung über eine Kommunikationsschnittstelle an die Sendeschaltung übermittelt wird.

Die Sendeschaltung sendet vorzugsweise bei einer Frequenz von 2,4 GHz, was einen lizenzfreien Betrieb der Messeinrichtung ermöglicht. Die abgestrahlte Sendeleistung kann auf 1 mW begrenzt werden. Der Sendebetrieb kann in der Anzeigeeinrichtung der Messeinrichtung angezeigt werden.

Die Messeinrichtung weist auch eine Empfangsschaltung auf, die mit der Sendeschaltung als integriert ausgeführte Sende- und Empfangsschaltung mit einer gemeinsamen Antenne realisiert werden kann. Es ist vorteilhaft, wenn die Zentraleinheit den vollständigen und/oder korrekten Empfang der Daten durch ein Bestätigungssignal quittiert, das in der Messeinrichtung durch eine Empfangsschaltung empfangen werden kann. Das von der Messeinrichtung empfangene Bestätigungssignal kann optisch oder akustisch ausgegeben werden, z.B. durch eine Information auf der Anzeigeeinheit angezeigt werden, so dass die Bedienperson feststellen kann, ob die Messwerte vollständig bzw. korrekt übermittelt wurden oder nicht.

Die Messeinrichtung kann außerdem einen Adressspeicher aufweisen, der zur Speicherung einer der Messeinrichtung zugeordneten Adresse dient. Diese Adresse ist vorzugsweise Bestandteil des Messwertsendesignals, so dass die das Messwertsendesignal empfangende Zentraleinheit den Messwert zu einer bestimmten Messeinrichtung zuordnen kann. Die Adresse der Messeinrichtung wird vorzugsweise durch die Zentraleinheit vorgegeben und ist veränderbar. Bei einer Initialisierung kann die Adresse durch die Zentraleinheit übermittelt, in der Empfangsschaltung der Messeinrichtung empfangen und im Adressspeicher abgelegt werden. Auf diese Weise entfallen feste Vorgaben der Adresse sowie Eingabemittel, um die Adresse unmittelbar in die Messeinrichtung einzugeben. Dadurch erhält man ein sehr flexibel einsetzbares System. Eine oder mehrere Messeinrichtungen können durch die veränderbare Adresse sehr einfach mit einer gemeinsamen Zentraleinheit kommunizieren.

Vorteilhafte Ausgestaltungen der Messeinrichtung ergeben sich aus den abhängigen Patentansprüchen sowie der Beschreibung. Die Beschreibung beschränkt sich auf wesentliche Merkmale der Erfindung anhand eines bevorzugten Ausführungsbeispiels. Die Zeichnung ist ergänzend heranzuziehen. Es zeigen:
Figur 1 eine stark schematisierte Ansicht einer Messeinrichtung sowie einer Zentraleinheit,
Figur 2 eine blockschaltbildähnliche Darstellung einer Messschaltung, einer Sende- und Empfangsschaltung sowie einer Spannungsversorgungsschaltung der Messeinrichtung,
Figur 3 eine schematische, blockschaltbildähnliche Darstellung der Anordnung der Schaltungen aus Figur 2 im Gehäuse der Messeinrichtung und
Figur 4 den zeitlichen Ablauf der zeitgesteuerten Sendens des Übertragungssignals im Anschluss an das Empfangen eines Zeitsynchronisationssignals.

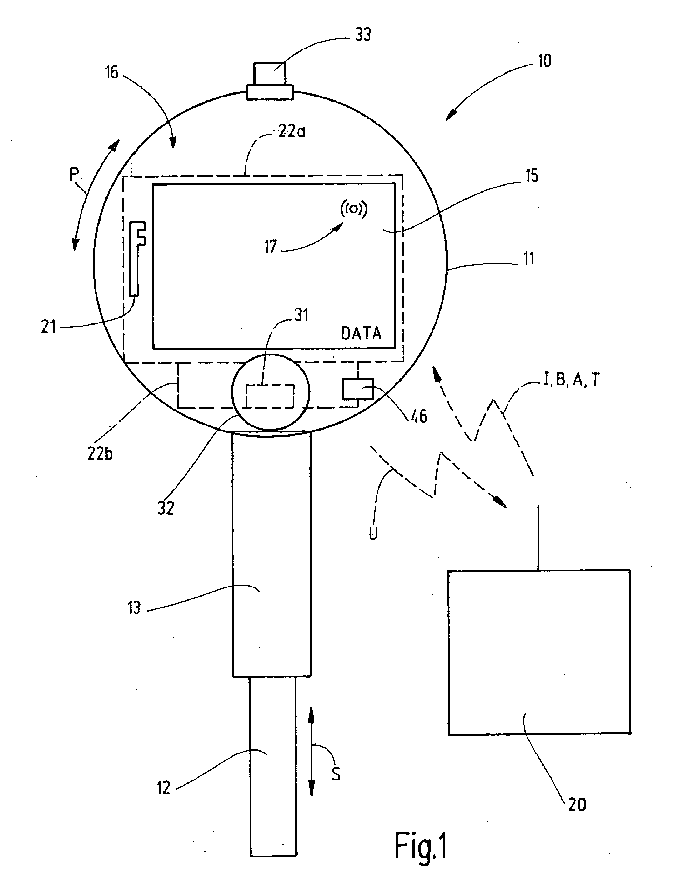

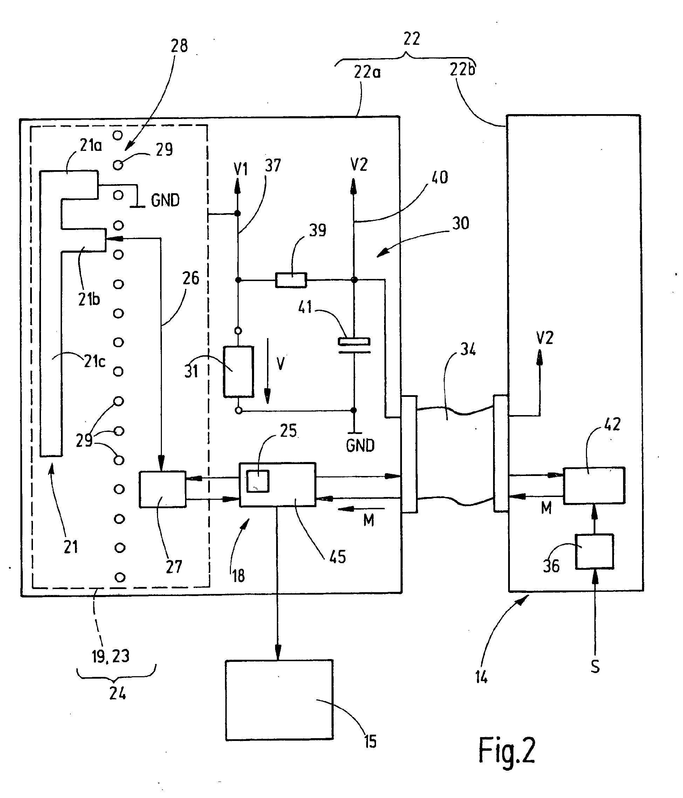

In Figur 1 ist schematisch eine Messeinrichtung 10 in Form einer Messuhr dargestellt. Die Messeinrichtung 10 weist ein Gehäuse 11 auf, aus dem ein Messwertaufnehmer 12 hinausragt. Beim Ausführungsbeispiel ist der Messwertaufnehmer 12 in einer Führung 13 am Gehäuse 11 linear verschiebbar gelagert. Mit Hilfe des Messwertaufnehmers 12 kann eine Positionsänderung eines Werkstücks abgetastet werden. Anhand der Stellung S des Messwertaufnehmers 12 wird in einer Messschaltung 14 der Messeinrichtung 10 ein elektrisches Messsignal M erzeugt (Figur 2). Der dem Messsignal M entsprechende Messwert wird der Bedienperson über eine Anzeigeeinrichtung 15 angezeigt. Die Messschaltung ist hierfür über eine Kommunikationsschnittstelle 18 mit der Anzeigeeinrichtung 15 verbunden. Als Anzeigeeinrichtung 15 dient beispielsweise eine monochromatische Flüssigkristallanzeige (LCD), insbesondere ein sogenanntes TN-LCD oder HTN-LCD. Beim Ausführungsbeispiel ist die Anzeigeeinrichtung 15 in einem drehbar gelagerten Gehäuseteil 16 angeordnet, so dass abhängig von der Positionierung der Messeinrichtung 10 die Bedienperson die Anzeigeeinrichtung 15 so ausrichten kann, dass die angezeigten Ziffern und/oder Buchstaben und/oder Symbole vertikal ausgerichtet sind und nicht auf dem Kopf stehen oder seitlich verdreht sind, wodurch das Ablesen der Messwerte vereinfacht wird. Die Drehachse verläuft senkrecht zur Fläche der Anzeigeeinrichtung 15, die Drehbarkeit des Gehäuseteils 16 ist durch Pfeil P veranschaulicht.

Derartige Messeinrichtungen 10 werden häufig in staubigen oder feuchten Umgebungen eingesetzt. Beim Ausführungsbeispiel ist das Gehäuse daher staubgeschützt oder staubgesichert ausgeführt. Außerdem kann es wassergeschützt ausgeführt sein.

Die Änderung der Stellung S des Messwertaufnehmers 12 kann abweichend vom beschriebenen Ausführungsbeispiel auch durch eine Schwenkbewegung oder eine Verformung des Messwertaufnehmers 12 erfasst werden. Die Messeinrichtung 10 kann alternativ zu der hier dargestellten Messuhr auch als Messschieber oder als Messschraube realisiert sein.

Über eine Kommunikationsschnittstelle 18, die beispielsgemäß von einer Steuereinheit 45 gebildet ist, ist die Messschaltung 14 mit einer Sendeschaltung 19 elektrisch verbunden. Die Kommunikationsschnittstelle 18 dient zur Übertragung des Messsignals M von der Messschaltung 14 zur Sendeschaltung 19 (Figur 2). Die Sendeschaltung 19 dient als drahtlose Schnittstelle der Messeinrichtung 10 zu einer Zentraleinheit 20. Die Sendeschaltung 19 erzeugt auf Basis des Messsignals M ein Übertragungssignal U, das der Zentraleinheit 20 drahtlos übermittelt wird. Hierfür weist die Sendeschaltung 19 eine Antenne 21 auf. Die Antenne 21 ist im Gehäuse 11 der Messeinrichtung 10 angeordnet und beim Ausführungsbeispiel als Leiterplattenantenne ausgeführt. Es handelt sich mithin um eine durch eine Kupferbahn auf eine Leiterplatte 22 gedruckte Antenne 21, die beim Ausführungsbeispiel als F-Antenne ausführt ist. Die Leiterplattenantenne 21 weist zwei parallele Schenkel 21a und 21b auf, die mit einem quer dazu angeordneten Längsabschnitt 21c verbunden sind. Der randseitige erste Schenkel 21a ist elektrisch mit Masse GND verbunden und der andere zweite Schenkel 21b ist über eine Antennenleitung 26 mit einer Übertragungssteuereinheit 27 elektrisch verbunden.

Alternativ könnte die Antenne auch als auf der Leiterplatte 22 montiertes Bauteil in Form einer SMD-Antenne realisiert sein.

Parallel zum Längsabschnitt 21c der Antenne 21 ist im Bereich der Enden der beiden Schenkel 21a, 21b eine Abschirmanordnung 28 vorgesehen, die die Antenne 21 vor unerwünschten Einkopplungen hochfrequenter Signale der Messschaltung 14 und der Sendeschaltung 19 abschirmt. Dies ist insbesondere von Bedeutung, da die Messschaltung 14 Analogsignale in Digitalsignale wandelt wodurch Oberwellen mit hoher Frequenz entstehen können. Die Abschirmanordnung 28 ist beim Ausführungsbeispiel durch eine Reihe von Durchkontaktierungen 29 gebildet, die jeweils alle Masselagen der Leiterplatte 22 miteinander verbinden. Die Reihe von Durchkontaktierungen 29 erstreckt sich vorzugsweise über die gesamte Länge der Leiterplatte 22 in Richtung des Längsabschnitt 21c.

Die Messeinrichtung 10 weist eine Empfangsschaltung 23 auf. Die Empfangsschaltung 23 verwendet dieselbe Antenne 21. Die Sendeschaltung 19 und die Empfangsschaltung 23 sind zu einer Sende- und Empfangsschaltung 24 integriert. Die Sende- und Empfangsschaltung 24 stellt somit eine bidirektionale drahtlose Schnittstelle zur Zentraleinheit 20 dar und kann das Übertragungssignal U senden und Signale von der Zentraleinheit 20 empfangen, beispielsweise ein Initialisierungssignal I.

Das Initialisierungssignal I dient bei erstmaliger Herstellung der Verbindung der Messeinrichtung 10 mit der Zentraleinheit 20 dazu, der Messeinrichtung 10 eine Adresse zuzuordnen. Die Adresse wird durch die Zentraleinheit 20 vergeben. Die Messeinrichtung 10 weist einen Adressspeicher 25 auf, in dem die durch das Initialisierungssignal I empfangene Adresse abgespeichert wird. Die Adresse wird beim Senden des Übertragungssignals U gemeinsam mit dem Messwert übermittelt, so dass die Zentraleinheit 20 den empfangenen Messwert einer bestimmten Messeinrichtung 10 zuordnen kann. Auf diese Weise können mehrere Messeinrichtungen 10 drahtlos mit einer gemeinsamen Zentraleinheit 20 verbunden werden. Die Adressen werden bei der Initialisierung durch die Zentraleinheit 20 vorgegeben uns bleiben nach der einmaligen Vergabe bis zu einer erneuten Initialisierung erhalten. Vor einer erneuten Vergabe der Adresse einer Messeinrichtung 10 muss deren Adresse von einer Bedienperson gelöscht werden. Erst dann kann die Zentraleinheit eine neue Adresse vergeben. Es ist dabei auch möglich, dass die Initialisierung während des Betriebs erneut durchgeführt wird, beispielweise, wenn zusätzliche Messeinrichtungen 10 mit der Zentraleinheit 20 verbunden werden oder Messeinrichtungen 10 abgeschaltet werden.

Der Sendebetrieb der Messeinrichtung 10 während der Übertragung des Übertragungssignals U wird der Bedienperson auf der Anzeigeeinrichtung 15 angezeigt, beispielsweise durch ein Symbol 17, wie dies in Figur 1 beispielhaft gezeigt ist. Wenn die Zentraleinheit 20 das Übertragungssignal U empfangen hat, quittiert sie den Empfang durch ein Bestätigungssignal B. Sobald die Empfangsschaltung 23 bzw. die Sende- und Empfangsschaltung 24 das Bestätigungssignal B empfangen hat, wird der Empfang auf der Anzeigeeinrichtung 15 der Bedienperson angezeigt. Beim Ausführungsbeispiel erfolgt dies durch die Ausgabe des Begriffs "Data" auf der Anzeigeeinrichtung 15. Es versteht sich, dass das Anzeigen von beliebigen Symbolen, Begriffen, Piktogrammen oder ähnlichem geeignet ist den Sendebetrieb und/oder den Empfang des Bestätigungssignals B anzuzeigen. Zusätzlich oder alternativ können auch akustische Signale verwendet werden. Allerdings ist dies beim Ausführungsbeispiel deswegen nicht vorgesehen, weil das Gehäuse 11 gegen Staub oder Wasser geschützt ausgeführt werden soll. Der Schutz lässt sich durch eine ausschließlich optische Anzeige einfacher realisieren.

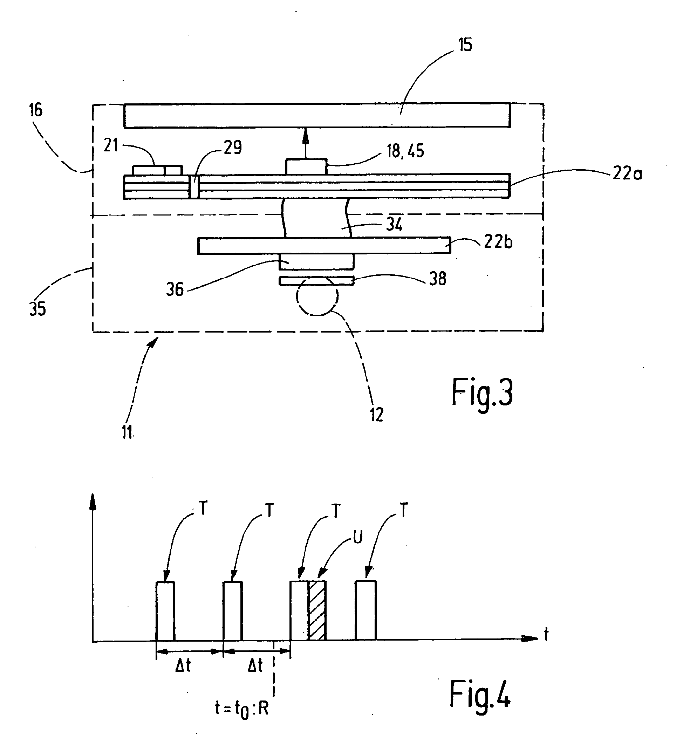

Zur Versorgung der Messschaltung 14 sowie der Sende- und Empfangsschaltung 24 mit elektrischer Energie ist eine Spannungsversorgungsschaltung 30 vorgesehen, an der die Messschaltung 14 sowie die Sende- und Empfangsschaltung 24 angeschlossen ist. Die Spannungsversorgungsschaltung 30 weist einen Energiespeicher 31 auf, der insbesondere durch eine Batterie oder einen wideraufladbaren Akkumulator gebildet ist. Der Energiespeicher 31 dient als einzige Energiequelle für die Messeinrichtung 10 und stellt eine Versorgungsspannung V zur Verfügung. Die Spannungsversorgungsschaltung 30 ist beim bevorzugten Ausführungsbeispiel gemeinsam mit der Sende- und Empfangsschaltung 24 auf einem ersten Leiterplattenteil 22a der Leiterplatte 22 angeordnet. Die Messschaltung 14 ist auf einem zweiten Leiterplattenteil 22b der Leiterplatte 22 angeordnet, wobei die beiden Leiterplattenteile 22a, 22b über ein flexibles Verbindungskabel 34 miteinander elektronisch verbunden sind. Die Leiterplatte 22 ist im Gehäuse 11 der Messeinrichtung 10 angeordnet. Dabei ist der erste Leiterplattenteil 22a unterhalb der Anzeigeeinrichtung 15 im drehbaren Gehäuseteil 16 angeordnet und bewegt sich bei einer Drehung mit diesem Gehäuseteil 16 mit. Der zweite Leiterplattenteil 22b mit der Messschaltung 14 ist in einem Basisteil 35 des Gehäuses 11 angeordnet, an dem auch die Führung 13 vorgesehen ist. Der Gehäuseteil 16 kann relativ zum Basisteil 35 in Pfeilrichtung P (Figur 1) gedreht werden. Der zweite Leiterplattenteil 22b bleibt ortsfest im Basisteil 35, wenn der Gehäuseteil 16 relativ zum Basisteil 35 gedreht wird (Figur 3).

Die Messschaltung 14 weist einen z.B. induktiven Sensor 36 auf, der die Stellung eines Maßstabs 38 erfasst und das Sensorsignal an eine Messsteuereinheit 42 weiterleitet. Der Maßstab 38 ist Bestandteil des Messwertaufnehmers 12, so dass über die Stellung des Messwertaufnehmers 12 auch die Stellung des Maßstabs 38 geändert und über den Sensor 36 erfasst wird. Ein dem Sensorsignal entsprechendes Messsignal M kann von der Messsteuereinheit 42 über die Kommunikationsschnittstelle 18 bzw. die Steuereinheit 45 zur Sende- und Empfangsschaltung 24 übermittelt werden.

Lediglich über eine Batteriefachöffnung 32 ist die Zugänglichkeit zur Spannungsversorgungsschaltung 30 ermöglicht, um die Batterie bzw. den Akkumulator austauschen zu können. Ist anstelle einer Batterie ein aufladbarer Akkumulator vorgesehen, könnte die Batteriefachöffnung 32 auch entfallen und ein von außen zugänglicher verschließbarer Kabelanschluss 33 vorgesehen werden. Der Kabelanschluss 33 kann dann zum Anschließen der Messeinrichtung 10 an ein Ladegerät dienen und/oder auch zur kabelgebundenen Übertragung des Messsignals M an die Zentraleinheit 20 oder einen anderen Teilnehmer dienen.

In Figur 2 ist ein Blockschaltbild der Spannungsversorgungsschaltung 30 dargestellt. Eine erste Versorgungsleitung 37 verbindet die Sende- und Empfangsschaltung 24 direkt mit dem Energiespeicher 31. An der ersten Versorgungsleitung 37 liegt eine erste Spannung V1 an. Die erste Versorgungsleitung 37 ist über einen Widerstand 39 mit einer zweiten Versorgungsleitung 40 elektrisch verbunden. Die zweite Versorgungsleitung 40 ist mit der Messschaltung 14 verbunden. Außerdem ist die zweite Versorgungsleitung 40 über einen Kondensator 41 an Masse GND angelegt. An der zweiten Versorgungsleitung 40 liegt eine zweite Spannung V2 für die Messschaltung 14 an.

Durch die Spannungsversorgungsschaltung 30 wird sichergestellt, dass das Messsignal M auch während des Sendens des Übertragungssignals U unbeeinträchtigt erfasst werden kann. Dadurch, dass die erster Versorgungsleitung 37 unmittelbar an der Versorgungsspannung V des Energiespeichers 31 anliegt, kann durch das Senden des Übertragungssignals U kurzzeitig ein Spannungsabfall der ersten Spannung V1 auftreten. Die zweite Spannung V2 für die Messschaltung 14 ist über den Kondensator 41 gepuffert und hält den notwendigen Spannungswert der zweiten Spannung V2 bei Spannungsschwankungen der ersten Spannung V1 über eine bestimmte Zeit aufrecht. Dadurch kann sich die Ladung des Kondensators 41 reduzieren. Der Kondensator 41 wird durch einen Ladestrom über den Widerstand 39 später wieder vollständig aufgeladen.

Der Messschaltung 14 sowie der Sende- und Empfangsschaltung 24 ist eine gemeinsame Steuereinheit 45 zugeordnet. Die Steuereinheit 45 kann beispielsweise von einem Mikrocontroller µC gebildet sein. Über die Steuereinheit 45 wird der Betrieb der Messschaltung 14 sowie der Sende- und Empfangsschaltung 24 gesteuert bzw. koordiniert. Die Steuereinheit 45 weist auch den Adressspeicher 25 auf.

Die Messeinrichtung 10 kann zur Verlängerung der Batterielebensdauer in einen ersten Ruhezustand und vorzugsweise auch in einen zweiten Ruhezustand versetzt werden. Nachfolgend werden das Übertragungsprotokoll und die beiden Ruhezustände erläutert.

Der Übertragungssteuereinheit 27 bzw. die Sende- und Empfangsschaltung 24 synchronisiert sich in einem vorgegebenen Zeitintervall Δt, beispielsweise alle 250 ms mit der Zentraleinheit 20. Die Synchronisation dient dazu, den Zeittakt der Messeinrichtung 10 an den zentralen Zeittakt der Zentraleinheit 20 anzupassen, um Abweichungen zu verhindern. Dabei empfängt die Sende- und Empfangsschaltung 24 lediglich ein Zeitsynchronisationssignal T, sofern keine Sendeanforderung vorliegt. Liegt eine Sendeanforderung R vor (in Figur 4 beispielsweise zum Zeitpunkt t=t₀), so erfolgt unmittelbar im Anschluss an den Empfang des Zeitsynchronisationssignals T das Senden des Übertragungssignals U, also der Adresse der Messeinrichtung 10 zusammen mit dem Messwert an die Zentraleinheit. Außerhalb dieses fest vorgegebenen Zeittakts mit Zeitintervallen Δt erfolgt keine Sendeübertragung durch die Messeinrichtung 10. Die Übertragungssteuereinheit 27 bzw. die Sende- und Empfangsschaltung 24 befinden sich zwischen den Synchronisations- und Sendezeitfenstern im ersten Ruhezustand, sofern dieser erste Ruhezustand nicht durch eine Sendeanforderung R aufgehoben wird. Das Zeitsynchronisationssignal T kann für alle an die Zentraleinheit 20 angeschlossenen Messeinrichtungen einheitlich sein oder aber über die Adresse für eine bestimmte Messeinrichtung 10 vorgesehen sein. In diesem Fall können den Messeinrichtungen 10 unterschiedlich große Zeitintervalle Δt und Übertragungszeitpunkte zugeordnet werden.

Dieser erste Ruhezustand der Übertragungssteuereinheit. 27 bzw. die Sende- und Empfangsschaltung 24 wird durch die Steuereinheit 45 beendet, wenn eine Sendeanforderung R vorliegt. Dies ist beispielsgemäß dann der Fall, wenn sich das Messsignal M ändert oder wenn mit dem Zeitsynchronisationssignal T ein Anforderungssignal A von der Zentraleinheit 20 empfangen wird oder wenn durch eine Bedienperson eine Datentaste 46 der Messeinrichtung 10 betätigt wird. Durch das Senden eines Anforderungssignals A wird die Messeinrichtung 10 veranlasst, das aktuelle anliegende Messsignal M durch Senden des Übertragungssignals U zu übermitteln. Das Anforderungssignal A enthält die Adresse der Messeinrichtung 10, die zur Messwertübermittlung aufgefordert wird. In der Steuereinheit 45 wird die empfangene Adresse mit der im Adressspeicher 25 abgelegten Adresse der Messeinrichtung 10 verglichen und nur dann zum nächstmöglichen Zeitpunkt ein Übertragungssignal U gesendet, wenn die beiden Adressen übereinstimmen.

Über die Steuereinheit 45 wird der aktuelle Messwert M in regelmäßigen Zeitabständen bei der Messsteuereinheit 47 abgefragt. Findet während eines vorgegebenen Zeitraums keine Messwertänderung statt und liegt auch keine anderweitige Sendeanforderung R vor, so schaltet die Steuereinheit 45 in einen zweiten Ruhezustand, in dem die regelmäßige Messwertabfrage abgeschaltet wird. In diesem zweiten Ruhezustand ist auch die Messsteuereinheit 42 im Ruhezustand. Sobald sich der Messwert M ändert oder eine andere Sendeanforderung R vorliegt, wird dieser zweite Ruhezustand wieder beendet.

Es ist auch möglich, durch die Steuereinheit 45 in einem vorgegebenen Zeittakt wiederholt das Senden des Übertragungssignals U zu veranlassen. Wird das Übertragungssignal U in einem regelmäßigen Takt in vorgegebenen Zeitintervallen ausgesendet, so kann auf die Quittierung der Übertragung durch ein Bestätigungssignal B verzichtet werden.

Die bidirektionale Übertragung erfolgt vorzugsweise codiert, so dass Unbefugte keinen Zugang zu den übertragenen Daten haben. Dabei wird in der Zentralstation 20 und in der Messeinrichtung 10 zusätzlich ein privater Schlüssel hinterlegt. Nur Daten, die mit diesem privaten Schlüssel durch die Übertragungssteuereinheit 27 entschlüsselt werden können, werden durch die Übertragungssteuereinheit 27 weitergegeben. Andernfalls lassen sich die empfangenen Daten nicht weiterverarbeiten. Dadurch ist ein größtmöglicher Datenschutz erreicht.

Die Erfindung betrifft eine Messeinrichtung 10 in Form einer Messuhr, eines Messschiebers oder einer Messschraube. Die Messeinrichtung 10 weist ein Gehäuse 11 auf, in dem auf einer gemeinsamen Leiterplatte 22 eine Messschaltung 14, eine Sendeschaltung 19 und eine Empfangsschaltung 23 angeordnet sind. Die Sendeschaltung 19 und die Empfangsschaltung 23 verwenden eine gemeinsame Leiterplattenantenne 21, die ebenfalls auf der Leiterplatte 22 vorgesehen ist. Ferner ist auf der Leiterplatte 22 eine Spannungsversorgungsschaltung 20 zur Spannungsversorgung der Messschaltung 14, der Sendeschaltung 19 und der Empfangsschaltung 23 angeordnet. Auf eine von außerhalb des Gehäuses 11 zugängliche Schnittstelle zwischen der Messschaltung 14 und der Sendeschaltung 19 bzw. der Empfangsschaltung 23 kann daher verzichtet werden. Durch die gemeinsame Spannungsversorgungsschaltung 30 ist der Bauraum für die gesamte Schaltungsanordnung reduziert. Das Gehäuse 11 der Messeinrichtung 10 lässt sich einfach abdichten und mithin in der erforderlichen Gehäuseschutzbauart ausführen. Über einen Messwertaufnehmer 12 am Gehäuse 11 wird ein Messwert aufgenommen, durch die Messschaltung 14 in ein elektrisches Messsignal M überführt und über die Sendeschaltung 19 an ein externes Gerät 20 drahtlos übermittelt.

### Bezugszeichenliste:

- 10: Messeinrichtung
- 11: Gehäuse
- 12: Messwertaufnehmer
- 13: Führung
- 14: Messschaltung
- 15: Anzeigeeinrichtung
- 16: Gehäuseteil
- 17: Symbol
- 18: Kommunikationsschnittstelle
- 19: Sendeschaltung
- 20: Zentraleinheit
- 21: Antenne
- 21a: erster Schenkel
- 21b: zweiter Schenkel
- 21c: Längsabschnitt
- 22: Leiterplatte
- 22a: erster Leiterplattenteil
- 22b: zweiter Leiterplattenteil
- 23: Empfangsschaltung
- 24: Sende- und Empfangsschaltung
- 25: Adressspeicher
- 26: Antennenleitung
- 27: Übertragungssteuereinheit
- 28: Abschirmanordnung
- 29: Durchkontaktierungen
- 30: Spannungsversorgungsschaltung
- 31: Energiespeicher
- 32: Batteriefachöffnung
- 33: Kabelanschluss
- 34: Verbindungskabel
- 35: Basisteil
- 36: induktiver Sensor
- 37: erste Versorgungsleitung
- 38: Maßstab
- 39: Widerstand
- 40: zweite Versorgungsleitung
- 41: Kondensator
- 42: Messsteuereinheit

- 45: Steuereinheit
- 46: Datentaste

- A: Anforderungssignal
- B: Bestätigungssignal
- I: Initialisierungssignal
- M: Messsignal
- P: Pfeil
- S: Stellung des Messwertaufnehmers
- T: Zeitsynchronisationssignal
- U: Übertragungssignal
- V: Versorgungsspannung
- V1: erste Spannung
- V2: zweite Spannung

## Patentansprüche

1. Messeinrichtung (10),
mit einem Gehäuse (11), an dem ein Messwertaufnehmer (12) angeordnet ist, dessen Stellung (S) veränderbar ist,
mit einer im Gehäuse (11) angeordneten Messschaltung (14) zur Erzeugung eines elektrischen Messsignals (M) abhängig von der Stellung des Messwertaufnehmers (12),
mit einer Sendeschaltung (19), die im Gehäuse (11) angeordnet ist und über eine Kommunikationsleitung (18) mit der Messschaltung (14) verbunden ist,
wobei die Sendeschaltung (19) dazu eingerichtet ist, ein dem elektrischen Messsignal (M) entsprechendes Übertragungssignal (U) drahtlos an eine Zentraleinheit (20) zu senden, wobei das Übertragungssignal das aktuell anliegende Messsignal (M) aufweist,
mit einer Empfangsschaltung (23), die integriert mit der Sendeschaltung (19) als Sende- und Empfangsschaltung (24) ausgeführt ist,
mit einer Steuereinheit (45), die der Messschaltung sowie der Sende- und Empfangsschaltung (24) zugeordnet ist, wobei die Steuereinheit (45) dazu eingerichtet ist, den aktuellen Messwert in regelmäßigen Zeitabständen bei einer Messsteuereinheit (42) abzufragen,
wobei die Sende- und Empfangsschaltung (24) dazu eingerichtet ist, sich in einem vorgegebenen Zeitintervall (Δt) mit der Zentraleinheit (20) zu synchronisieren, und bei Vorliegen einer Sendeanforderung (R), unmittelbar im Anschluss an den Empfang des Zeitsynchronisationssignals (T) das Übertragungssignal (U) an die Zentraleinheit (20) zu senden,
und wobei sich die Sende- und Empfangsschaltung (24) zwischen den Synchronisations- und Sendezeitfenstern in einem Ruhezustand befindet, sofern dieser Ruhezustand nicht durch eine Sendeanforderung (R) aufgehoben wird.

2. Messeinrichtung nach Anspruch 1,
**dadurch gekennzeichnet, dass** eine einen Energiespeicher (31) aufweisende Spannungsversorgungsschaltung (30) vorhanden ist, an die sowohl die Sendeschaltung (19), als auch die Messschaltung (14) angeschlossen ist.

3. Messeinrichtung nach Anspruch 2,
**dadurch gekennzeichnet, dass** eine mit der Sendeschaltung (19) verbundene erste Versorgungsleitung (37) unmittelbar an der Versorgungsspannung (V) der Spannungsversorgungsschaltung (30) anliegt.

4. Messeinrichtung nach Anspruch 2,
**dadurch gekennzeichnet, dass** eine mit der Messschaltung (14) verbundene zweite Versorgungsleitung (40) über einen Widerstand (39) mit der Versorgungsspannung (V) der Spannungsversorgungsschaltung (30) verbunden und über einen Kondensator (41) mit Masse (GND) verbunden ist.

5. Messeinrichtung nach Ansprüchen 3 und 4,
**dadurch gekennzeichnet, dass** der Widerstand (39) unmittelbar mit der Versorgungsspannung (V) verbunden ist.

6. Messeinrichtung nach Anspruch 1,
**gekennzeichnet durch** die Ausführung als Längenmesseinrichtung.

7. Messeinrichtung nach Anspruch 1,
**dadurch gekennzeichnet, dass** das Gehäuse (11) staubgeschützt oder staubdicht und/oder wassergeschützt ausgeführt ist.

8. Messeinrichtung nach Anspruch 1,
**dadurch gekennzeichnet, dass** die Sendeschaltung (19) eine im Gehäuse (11) angeordnete Antenne (21) aufweist.

9. Messeinrichtung nach Anspruch 8,
**dadurch gekennzeichnet, dass** die Antenne (21) als Leiterplattenantenne oder als SMD-Antenne ausgeführt ist.

10. Messeinrichtung nach Anspruch 1,
**dadurch gekennzeichnet, dass** die Sendeschaltung (19) und die Messschaltung (14) eine gemeinsame Steuereinheit (45) aufweisen.

11. Messeinrichtung nach Anspruch 1,
**dadurch gekennzeichnet, dass** ein Adressspeicher (25) vorhanden ist, der zur Speicherung einer der Messeinrichtung (10) zugeordneten Adresse dient.

12. Messeinrichtung nach Anspruch 11,
**dadurch gekennzeichnet, dass** die Adresse von der Empfangsschaltung (23) empfangen und im Adressspeicher (25) abgelegt wird.

13. Messeinrichtung nach Anspruch 11,
**dadurch gekennzeichnet, dass** die Sendeschaltung (19) dazu eingerichtet ist, die Adresse der Messeinrichtung (10) gemeinsam mit dem Übertragungssignal (U) an die Zentraleinheit (20) zu senden.

14. Anordnung aus wenigstens einer Messeinrichtung (10) nach einem der vorhergehenden Ansprüche und einer Zentraleinheit (20) mit einer Sende- und Empfangseinheit zur drahtlosen Kommunikation mit der wenigstens einen Messeinrichtung (10), wobei die Zentraleinheit (20) dazu eingerichtet ist, bei der Initialisierung (I) der Messeinrichtung (10) eine Adresse zuzuordnen.

## Claims

1. Measuring device (10),
with a casing (11), on which is arranged a transducer (12), the position of which (S) is adjustable,
with a measurement circuit (14) arranged in the casing (11) for generating an electrical signal (M) dependent on the position of the transducer (12),
with a transmission circuit (19), which is arranged in the casing (11) and is connected to the measurement circuit (14) by means of a communication line (18),
wherein the transmission circuit (19) is arranged to wirelessly transmit to a central processing unit (20) a transmission signal (U) corresponding to the electrical measurement signal (M), wherein the transmission signal has the currently present measurement signal (M),
with a receiving circuit (23), which is configured to be integrated with the transmission circuit (19) as a send and receive circuit (24),
with a control unit (45), which is associated with the measurement circuit as well as the send and receive circuit (24), wherein the control unit (45) is arranged to scan the current measurement value at regular time intervals at a measurement control unit (42),
wherein the send and receive circuit (24) is arranged to synchronise with the central processing unit (20) at a predetermined time interval (Δt) and, when a transmit request (R) is present, to transmit the transmission signal (U) to the central processing unit (20) directly after receipt of the time synchronisation signal (T),
and wherein the send and receive circuit (24) is positioned in a resting state between the synchronisation and transmission time windows unless this resting state is cancelled by a transmit request (R).

2. Measuring device according to claim 1, **characterised in that** a voltage supply circuit (30) is provided, which has an energy storage means (31) and to which both the transmission circuit (19) and the measurement circuit (14) are connected.

3. Measuring device according to claim 2, **characterised in that** a first supply line (37) connected to the transmission circuit (19) connects directly to the supply voltage (V) of the voltage supply circuit (30).

4. Measuring device according to claim 2, **characterised in that** a second supply line (40) connected to the measuring circuit (14) is connected to the supply voltage (V) of the voltage supply circuit (30) via a resistor (39) and is connected to earth (GND) via a capacitor (41).

5. Measuring device according to claims 3 and 4, **characterised in that** the resistor (39) is connected directly to the supply voltage (V).

6. Measuring device according to claim 1, **characterised by** the configuration as length measuring device.

7. Measuring device according to claim 1, **characterised in that** the casing (11) is configured to be protected from dust or dust-proof and/or waterproof.

8. Measuring device according to claim 1, **characterised in that** the transmission circuit (19) has an antenna (21) arranged in the casing (11).

9. Measuring device according to claim 8, **characterised in that** the antenna (21) is configured as a circuit board antenna or SMD antenna.

10. Measuring device according to claim 1, **characterised in that** the transmission circuit (19) and the measurement circuit (14) have a common control unit (45).

11. Measuring device according to claim 1, **characterised in that** an address memory (25) is provided, which serves to store an address assigned to the measuring device (10).

12. Measuring device according to claim 11, **characterised in that** the address is received by the receiving circuit (23) and filed in the address memory (25).

13. Measuring device according to claim 11, **characterised in that** the transmission circuit (19) is arranged to transmit the address of the measuring device (10) jointly with the transmission signal (U) to the central processing unit (20).

14. Arrangement comprising at least one measuring device (10) according to one of the preceding claims and a central processing unit (20) with a send and receive unit for wireless communication with the at least one measuring device (10), wherein the central processing unit (20) is arranged to assign an address during initialisation (I) of the measuring device (10).

## Revendications

1. Dispositif de mesure (10),
comprenant un boîtier (11) sur lequel est disposé un capteur de mesure (12) dont la positon (S) peut être modifiée,
comprenant un circuit de mesure (14) qui est disposé dans le boîtier et est destiné à produire un signal de mesure (M) électrique en fonction de la position du capteur de mesure (12),
comprenant un circuit d'émission (19) qui est disposé dans le boîtier (11) et est relié au circuit de mesure (14) par l'intermédiaire d'une ligne de communication (18),
le circuit d'émission (19) étant conçu pour envoyer sans fil un signal de transmission (U), correspondant au signal de mesure (M) électrique, à une unité centrale (20), sachant que le signal de transmission présente le signal de mesure (M) appliqué du moment,
comprenant un circuit de réception (23) qui est réalisé de façon intégrée avec le circuit d'émission (19), en tant que circuit d'émission et de réception (24),
comprenant une unité de commande (45) qui est associée au circuit de mesure ainsi qu'au circuit d'émission et de réception (24), l'unité de commande (45) étant conçue pour extraire la valeur de mesure du moment à des intervalles de temps réguliers d'une unité de commande de mesure (42),
le circuit d'émission et de réception (24) étant conçu pour se synchroniser avec l'unité centrale (20) dans un intervalle de temps (Δt) prédéterminé et, en présence d'une demandé d'émission (R), envoyer le signal de transmission (U) à l'unité centrale (20), immédiatement après la réception du signal de synchronisation de temps (T),
et le circuit d'émission et de réception (24) se trouvant à l'état de repos entre les fenêtres de temps de synchronisation et d'émission, dans la mesure où cet état de repos n'est pas annulé par une demande d'émission (R).

2. Dispositif de mesure selon la revendication 1, **caractérisé en ce qu'**il est prévu un circuit d'alimentation en tension (30) qui présente un accumulateur d'énergie (31) et auquel sont connectés aussi bien le circuit d'émission (19) que le circuit de mesure (14).

3. Dispositif de mesure selon la revendication 2, **caractérisé en ce qu'**une première ligne d'alimentation (37), reliée au circuit d'émission (19), est connectée directement à la tension d'alimentation (V) du circuit d'alimentation en tension (30).

4. Dispositif de mesure selon la revendication 2, **caractérisé en ce qu'**une deuxième ligne d'alimentation (40), reliée au circuit de mesure (14), est reliée à la tension d'alimentation (V) du circuit d'alimentation en tension (30), par l'intermédiaire d'une résistance (39), et est reliée à la masse (GND) par l'intermédiaire d'un condensateur (41).

5. Dispositif de mesure selon les revendications 3 et 4, **caractérisé en ce que** la résistance (39) est reliée directement à la tension d'alimentation (V).

6. Dispositif de mesure selon la revendication 1, **caractérisé en ce qu'**il est réalisé comme dispositif de mesure de longueur.

7. Dispositif de mesure selon la revendication 1, **caractérisé en ce que** le boîtier (11) est réalisé de manière à être protégé contre la poussière ou à être étanche à la poussière et/ou à être protégé contre l'eau.

8. Dispositif de mesure selon la revendication 1, **caractérisé en ce que** le circuit d'émission (19) présente une antenne (21) disposée dans le boîtier (11).

9. Dispositif de mesure selon la revendication 8, **caractérisé en ce que** l'antenne (21) est réalisée sous forme d'antenne sur circuit imprimé ou d'antenne à composants montés en surface.

10. Dispositif de mesure selon la revendication 1, **caractérisé en ce que** le circuit d'émission (19) et le circuit de mesure (14) présentent une unité de commande (45) commune.

11. Dispositif de mesure selon la revendication 1, **caractérisé en ce qu'**il est prévu une mémoire d'adresse (25) qui sert à enregistrer une adresse associée au dispositif de mesure (10).

12. Dispositif de mesure selon la revendication 11, **caractérisé en ce que** l'adresse est reçue par le circuit de réception (23) et est enregistrée dans la mémoire d'adresse (25).

13. Dispositif de mesure selon la revendication 11, **caractérisé en ce que** le circuit d'émission (19) est conçu pour envoyer l'adresse du dispositif de mesure (10) à l'unité centrale (20), conjointement avec le signal de transmission (U).

14. Ensemble constitué d'au moins un dispositif de mesure (10) selon l'une des revendications précédentes et d'une unité centrale (20) comprenant une unité d'émission et de réception pour la communication sans fil avec le dispositif de mesure (10), au nombre d'au moins un, l'unité centrale (20) étant conçue pour associer une adresse au dispositif de mesure (10) lors de l'initialisation (I).
